(19) Europäisches Patentamt
European Patent Office
Office européen des brevets

(11) **EP 0 907 686 B1**

(12) **FASCICULE DE BREVET EUROPEEN**

(45) Date de publication et mention de la délivrance du brevet:
**06.10.2004 Bulletin 2004/41**

(21) Numéro de dépôt: **98921565.2**

(22) Date de dépôt: **17.04.1998**

(51) Int Cl.[7]: **C08L 95/00**, C08K 3/06, C08K 5/00, C10C 3/02, C08K 5/372 // (C08L95/00, 53:02)

(86) Numéro de dépôt international:
**PCT/FR1998/000788**

(87) Numéro de publication internationale:
**WO 1998/047966 (29.10.1998 Gazette 1998/43)**

(54) **PROCEDE DE PREPARATION DE COMPOSITIONS BITUME/POLYMERE, LEUR UTILISATION DANS DES REVETEMENTS**

VERFAHREN ZUR HERSTELLUNG VON BITUMEN/POLYMER ZUSAMMENSETZUNGEN, IHRE VERWENDUNG IN BESCHICHTUNGEN

METHOD FOR PREPARING BITUMEN/POLYMER COMPOSITIONS, USE THEREOF IN SURFACING MATERIALS

(84) Etats contractants désignés:
**AT BE CH DE DK ES FI FR GB GR IE IT LI LU NL PT SE**
Etats d'extension désignés:
**LT LV**

(30) Priorité: **21.04.1997 FR 9704892**

(43) Date de publication de la demande:
**14.04.1999 Bulletin 1999/15**

(73) Titulaire: **ELF ANTAR FRANCE**
**92400 Courbevoie (FR)**

(72) Inventeurs:
- **PLANCHE, Jean-Pascal**
  **F-38540 Saint Just Chaleyssin (FR)**
- **ZINS, Annie**
  **F-38200 Seyssuel (FR)**
- **LACOUR, Claude**
  **F-38200 Vienne (FR)**

(74) Mandataire: **Jolly, Jean-Pierre**
**Cabinet Jolly**
**54, rue de Clichy**
**75009 Paris (FR)**

(56) Documents cités:
**EP-A- 0 096 638**
**US-A- 4 145 322**
**US-A- 4 530 652**
**US-A- 5 234 999**
**US-A- 5 371 121**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 907 686 B1

Printed by Jouve, 75001 PARIS (FR)

## Description

L'invention a trait à un procédé de préparation de compositions bitume/polymère à propriétés mécaniques renforcées. Elle se rapporte encore à l'application des compositions obtenues à la production de liants bitume/polymère pour revêtements et en particulier de revêtements superficiels routiers, d'enrobés ou encore de revêtements d'étanchéité et elle a trait également à une solution mère de polymère utilisable pour la préparation desdites compositions.
Il est connu d'utiliser des compositions bitumineuses comme revêtements de surfaces diverses et en particulier comme enduits superficiels routiers à condition que ces compositions possèdent un certain nombre de qualités mécaniques essentielles.
Ces qualités mécaniques sont appréciées, en pratique, en déterminant, par des essais normalisés, une série de caractéristiques mécaniques, dont les plus utilisées sont les suivantes :

- point de ramollissement, exprimé en °C et déterminé par l'essai Bille et Anneau défini par la norme NF T 66008,
- point de fragilité ou point de Fraass, exprimé en °C et déterminé selon la norme IP 80/53,
- pénétrabilité, exprimée en 1/10 de mm et déterminée selon la norme NF T 66004,
- caractéristiques rhéologiques en traction déterminées selon la norme NF T 46002 et comportant les grandeurs :
  - . contrainte au seuil $\sigma_s$ en bars,
  - . allongement au seuil $\varepsilon_s$ en %,
  - . contrainte à la rupture $\sigma_r$ en bars,
  - . allongement à la rupture $\varepsilon_r$ en %.

On peut également obtenir une indication de la susceptibilité thermique des compositions bitumineuses à partir d'une corrélation entre la pénétrabilité (en abrégé pen) et le point de ramollissement (en abrégé TBA) desdites compositions connue sous le nom d'indice de PFEIFFER (en abrégé IP).
Cet indice se calcule par la relation :

$$IP = \frac{20 - 500\ A}{1 + 50\ A}$$

dans laquelle A est la pente de la droite représentée par l'équation :

$$A = \frac{\log_{10} 800 - \log_{10} pen}{TBA\text{-}25}$$

La susceptibilité thermique de la composition bitumineuse est d'autant plus faible que la valeur de l'indice de PFEIFFER est plus grande ou, ce qui revient au même, que la valeur de la grandeur A est plus faible. Pour les bitumes classiques l'indice de PFEIFFER prend des valeurs se situant aux alentours de zéro.
En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume/polymère ayant des qualités mécaniques améliorées par rapport à celles des bitumes seuls.
Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylate, polychloroprène, copolymère éthylène/propylène, terpolymère éthylène/propylène/diène, polynorbornène ou encore copolymères statistiques ou séquencés de styrène et d'un diène conjugué.
Parmi les polymères ajoutés aux bitumes, les copolymères statistiques ou séquencés de styrène et d'un diène conjugué et notamment de styrène et de butadiène sont particulièrement efficaces car ils se dissolvent très facilement dans les bitumes et leur confèrent d'excellentes propriétés mécaniques et dynamiques et notamment de très bonnes propriétés de viscoélasticité.
On sait encore que la stabilité des compositions bitume/polymère pour lesquelles le polymère ajouté au bitume est un copolymère de styrène et d'un diène conjugué tel que butadiène, peut être améliorée par des réactions, réalisées in situ, de couplage chimique du polymère au bitume au moyen d'un agent de couplage donneur de soufre (FR-A-2376188, FR-A-2429241, FR-A-2528439 et EP-A-0360656) ou de fonctionnalisation du polymère au moyen d'un agent de fonctionnalisation du type acide ou ester carboxylique à groupements thiols ou disulfures (demande de brevet français N°9512276 du 19-10-1995 au nom de la demanderesse).
On a maintenant trouvé que l'effet bénéfique des copolymères stastistiques ou séquencés de styrène et de

butadiène sur l'amélioration des caractéristiques mécaniques et rhéologiques, notamment consistance, susceptibilité thermique et propriétés mécaniques en traction, des compositions bitume/polymère renfermant ces polymères pouvait être encore amélioré, surtout lorsque les compositions bitume/polymère sont réticulées,en utilisant un copolymère de styrène et de butadiène ayant une teneur en motifs butadiène à double liaison 1,2 plus élevée que celle des copolymères styrène/butadiène habituellement utilisés.

L'invention a donc pour objet un procédé de préparation de compositions bitume/polymère à propriétés mécaniques renforcées, dans lequel on met en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,1 % à 30 %, de préférence 0,3 % à 20 % et plus spécialement 0,5 % à 10 %, d'un copolymère de styrène et de butadiène renfermant 50% à 95% et plus particulièrement 60% à 95% en poids de motifs issus du butadiène, ledit procédé se caractérisant en ce que le copolymère de styrène et de butadiène renferme une proportion de motifs à double liaison 1,2 issus du butadiène comprise entre 12% et 50% et de préférence allant de 20% à 40% en poids dudit copolymère.

Le copolymère de styrène et de butadiène, utilisé dans la préparation des compositions bitume/ polymère selon l'invention, peut être choisi avantageusement parmi les copolymères de styrène et de butadiène, qui présentent une structure de copolymères séquencés linéaires ou étoilés, avec ou sans charnière statistique, et qui possèdent la teneur pondérale globale en butadiène et la teneur en motifs à double liaison 1,2 issus du butadiène définies plus haut. La masse moléculaire moyenne en poids du copolymère de styrène et de butadiène peut être comprise entre 10000 et 600000 daltons et se situe de préférence entre 30000 et 400000 daltons.

Les copolymères de styrène et de butadiène utilisés selon l'invention peuvent être préparés par polymérisation anionique des monomères en présence d'initiateurs consistant en composés organométalliques de métaux alcalins, notamment composés organolithiés tels que alkyl-lithium et tout spécialement butyl-lithium, en opérant à des températures égales ou inférieures à 0°C et en solution dans un solvant, dont au moins une partie consiste en un solvant polaire tel que tétrahydrofuranne ou éther diéthylique.

Selon une forme préférée de mise en oeuvre de la préparation des compositions bitume/polymère selon l'invention, la masse de bitume ou mélange de bitumes et de copolymère de styrène et de butadiène, que l'on maintient sous agitation à des températures comprises entre 100°C et 230°C pour former la composition bitume/polymère, renferme également au moins un agent réticulant pour la composition choisi dans le groupe formé par (i) les agents de couplage donneur de soufre, (ii) les agents de fonctionnalisation pris parmi les acides ou esters carboxyliques à groupements thiols ou disulfures et (iii) les composés peroxydés générant des radicaux libres aux températures comprises entre 100°C et 230°C .

Le bitume ou mélange de bitumes, que l'on utilise pour la mise en oeuvre du procédé selon l'invention, est choisi avantageusement parmi les divers bitumes qui possèdent une viscosité cinématique à 100°C comprise entre $0,5x10^{-4}$ $m^2/s$ et $3x10^{-2}$ $m^2/s$ et de préférence entre $1x10^{-4}$ $m^2/s$ et $2x10^{-2}$ $m^2/s$. Ces bitumes peuvent être des bitumes de distillation directe ou de distillation sous pression réduite ou encore des bitumes soufflés ou semi-soufflés, des résidus de désasphaltage au propane ou au pentane, des résidus de viscoréduction, voire même certaines coupes pétrolières ou des mélanges de bitumes et de distillats sous vide ou encore des mélanges d'au moins deux des produits venant d'être énumérés. Avantageusement, le bitume ou mélange de bitumes utilisé dans le procédé selon l'invention, outre une viscosité cinématique comprise dans les intervalles précités, présente une pénétrabilité à 25°C, définie suivant la norme NF T 66004, comprise entre 5 et 900 et de préférence entre 10 et 400.

Outre le copolymère de styrène et de butadiène à teneur en motifs à double liaison 1,2 issus du butadiène telle que définie plus haut, la composition bitume /polymère selon l'invention, qu'elle soit réticulée ou non réticulée, peut encore renfermer un ou plusieurs polymères additionnels différents dudit copolymère de styrène et de butadiène, le ou lesdits polymères additionnels étant en particulier des polymères oléfiniques tels que polyéthylène, polypropylène, polybutène, polyisobutène, copolymères éthylène/acétate de vinyle, copolymères éthylène/propylène, terpolymères éthylène/propylène/diène, copolymères éthylène/acrylate ou méthacrylate d'alkyle, des polymères tels que polybutadiène, polyisoprène ou polynorbornène, ou bien encore des polymères oléfiniques fonctionnalisés à groupements époxy ou COOH tels que copolymères éthylène/acrylate ou méthacrylate de glycidyle, terpolymères éthylène/acrylate ou méthacrylate d'alkyle/acrylate ou méthacrylate de glycidyle et notamment terpolymère éthylène/acrylate de méthyle/ méthacrylate de glycidyle et terpolymères éthylène/acrylate ou méthacrylate d'alkyle/anhydride maléique et notamment terpolymère éthylène/acrylate de butyle/anhydride maléique.

La quantité du ou des polymères additionnels dans la composition bitume/polymère peut être comprise entre 0,3 % et 20 % et de préférence entre 0,5 % et 10 % du poids du bitume de ladite composition

L'agent de couplage donneur de soufre, que l'on utilise pour produire une composition bitume/polymère réticulée, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, l'agent de couplage donneur de soufre est choisi parmi les produits M, qui renferment, en poids, de 0 % à 100 % d'un composante CA consistant en un ou

plusieurs accélérateurs de vulcanisation donneurs de soufre et de 100 % à 0 % d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale

$$R_8-(S)_m-(R_9-(S)_m)_w-R_{10}$$

dans laquelle $R_8$ et $R_{10}$ désignent chacun un radical hydrocarboné monovalent, saturé ou insaturé, en $C_1$ à $C_{20}$ ou sont reliés entre eux pour constituer un radical hydrocarboné divalent en $C_1$ à $C_{20}$, saturé ou insaturé, formant un cycle avec les autres groupements d'atomes associés dans la formule, $R_9$ est un radical hydrocarboné divalent, saturé ou insaturé, en $C_1$ à $C_{20}$, les $-(S)_m-$ représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et w représente un nombre entier prenant les valeurs de zéro à 10. Des polysulfures préférés répondent à la formule $R_{11}-(S)_p-R_{11}$, dans laquelle $R_{11}$ désigne un radical alkyle en $C_6$ à $C_{16}$, par exemple hexyle, octyle, dodécyle, tertiododécyle, hexadécyle, nonyle, décyle, et $-(S)_p-$ représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule

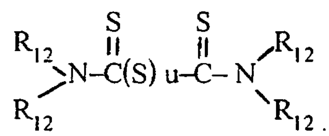

dans laquelle les $R_{12}$, identiques ou différents, représentent chacun un radical hydrocarboné en $C_1$ à $C_{12}$ et de.préférence en $C_1$ à $C_8$, notamment radical alkyle, cycloalkyle ou aryle, ou bien deux radicaux $R_{12}$ fixés à un même atome d'azote sont reliés entre eux pour former un radical divalent hydrocarboné en $C_2$ à $C_8$ et u est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre, on peut encore citer les disulfures d'alkylphénols et les disulfures tels que disulfure de morpholine et N,N'- disulfure de caprolactame.

Les accélérateurs de vulcanisation non donneurs de soufre utilisables pour former la composante CC des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule

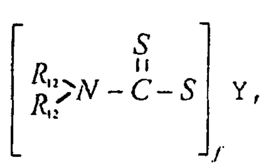

dans laquelle les $R_{12}$, identiques ou différents, ont la signification donnée plus haut, Y représente un métal et f désigne la valence de Y, et les monosulfures de thiurame de formule

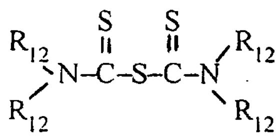

dans laquelle les $R_{12}$ ont la signification donnée plus haut.

Des exemples d'accélérateurs de vulcanisation du type des mercaptobenzothiazoles peuvent être tels que mercaptobenzothiazole, benzothiazole thiolate d'un métal tel que zinc, sodium, cuivre, disulfure de benzothiazyle, 2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1, 3 guanidine, diorthotolylguanidine et oxyde de zinc, ce dernier composé étant utilisé éventuellement en présence d'acide gras.

Pour plus de détails sur les accélérateurs de vulcanisation donneurs de soufre et non donneurs de soufre utilisables dans la constitution de l'agent de couplage donneur de soufre, on peut se référer aux citations EP-A-0360656 et EP-A-0409683, dont le contenu est incorporé à la présente description par référence, de même que le contenu de la citation FR-A-2528439.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

L'agent de couplage est utilisé en quantité propre à fournir une quantité de soufre libre représentant 0,1 % à 20 % et de préférence 0,5 % à 10 % du poids du copolymère de styrène et de butadiène utilisé dans la préparation de la composition bitume/polymère réticulée par l'agent de couplage.

L'agent de fonctionnalisation que l'on utilise pour produire une composition bitume/polymère fonctionnalisé consiste en au moins un composé de formule

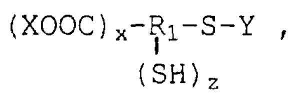

dans laquelle Y désigne un atome d'hydrogène ou un reste monovalent

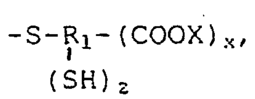

$R_1$ désigne un radical hydrocarboné (x+z+1)-valent en $C_1$ à $C_{12}$, de préférence en $C_1$ à $C_8$, X représente H ou un radical hydrocarboné monovalent R en $C_1$ à $C_{12}$ et de préférence en $C_1$ à $C_8$, z est égal à zéro ou un et x est un nombre entier ayant une valeur allant de 1 à 3 et de préférence égale à 1 ou 2, avec $x+y \leq 3$.

Avantageusement, l'agent de fonctionnalisation consiste en au moins un composé ayant la formule $Y_1$-S-$R_3$-$(COOX)_x$, où $Y_1$ désigne H ou un reste monovalent -S-$R_3$-$(COOX)_x$, et notamment la formule $Y_2$-S-$R_3$-$(COOH)_x$, où $Y_2$ représente H ou un reste monovalent -S-$R_3$-$(COOH)_x$, $R_3$ désigne un radical hydrocarboné (x+1)-valent en C1 à $C_{12}$ et de préférence en $C_1$ à $C_8$ et X et x ont les significations données plus haut.

Dans les formules précitées de l'agent de fonctionnalisation, le radical hydrocarboné (x+y+1)-valent $R_1$, le radical (x+1)-valent $R_3$ et le radical hydrocarboné monovalent R peuvent représenter chacun un radical aliphatique saturé, linéaire ou ramifié, en $C_1$ à $C_{12}$ et de préférence en $C_1$ à $C_8$, un radical aliphatique insaturé, linéaire ou ramifié, en $C_2$ à $C_{12}$ et de préférence en $C_2$ à $C_8$, un radical cycloaliphatique en $C_4$ à $C_{12}$ et de préférence en $C_6$ à $C_8$ ou un radical aromatique en $C_6$ à $C_{12}$ et de préférence en $C_6$ à $C_8$. De préférence, le radical R est un radical alkyle, linéaire ou ramifié, en $C_1$ à $C_{12}$ et plus spécialement en $C_1$ à $C_8$ tel que, par exemple, méthyle, éthyle, propyle, butyle, isobutyle, isooctyle, éthyle-2 hexyle, n-hexyle, n-octyle.

A titre d'exemples d'agent de fonctionnalisation répondant aux formules données plus haut, on peut citer :

(i) les acides thiolcarboxyliques tels que l'acide thiolacétique (acide thioglycolique) de formule $HS-CH_2-COOH$, l'acide thiolpropionique de formule $HS-CH_2-CH_2-COOH$, l'acide thiolbutanoique de formule $HS-CH_2-CH_2-CH_2-COOH$, l'acide mercaptosuccinique de formule

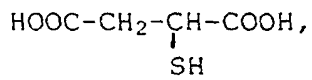

l'acide dimercaptosuccinique de formule

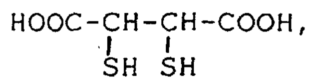

l'acide thiosalicylique de formule

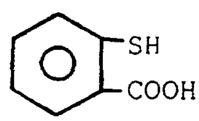

(ii) les composés disulfures tels que l'acide dithio-2,2'-diacétique de formule $HOOC-CH_2-S-S-CH_2-COOH$, l'acide dithio-3,3'-dipropionique de formule $HOOC-CH_2-CH_2-S-S-CH_2-CH_2-COOH$, l'acide dithio-4,4'-butanoique de formule $HOOC-(CH_2)_3-S-S-(CH_2)_3-COOH$ et l'acide dithio-2,2'-disalicylique de formule

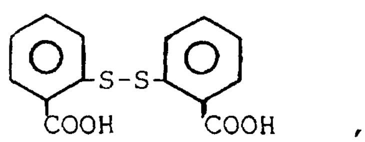

ainsi que

(iii) les esters dérivant desdits acides exemplifiés ci-dessus, par remplacement des groupements fonctionnels -COOH par des groupements fonctionnels esters -COOR', où R' est un radical alkyle en $C_1$ à $C_{12}$ et plus particulièrement en $C_1$ à $C_8$ comme, par exemple, méthyle, éthyle, propyle, butyle, isobutyle, éthyle-2 hexyle, n-octyle, isooctyle.

L'agent de fonctionnalisation est utilisé en quantité comprise entre 0,01% et 6% et plus spécialement entre 0,05% et 3% du poids de bitume ou mélange de bitumes employé pour produire la composition bitume/ polymère fonctionnalisé.

Le composé peroxydé, générateur de radicaux libres aux températures comprises entre 100°C et 230°C, peut être utilisé seul comme agent de couplage pour produire une composition bitume/polymère réticulée ou bien être employé en association avec l'agent de fonctionnalisation pour produire une composition bitume/polymère fonctionnalisé. Ledit composé peroxydé, qui est utilisé en quantité allant de 0% jusqu'à, par exemple, 15% en poids du copolymère de styrène et de butadiène, peut être, notamment, choisi parmi les peroxydes de dihydrocarbyle comme le peroxyde de ditertiobutyle et le peroxyde de dicumyle.

La composition bitume/polymère non réticulée ou non fonctionnalisée est préparée en mettant en contact le copolymère de styrène et de butadiène à teneur particulière en motifs à double liaison 1,2 issus du butadiène et, le cas échéant, le ou les polymères additionnels avec le bitume ou mélange de bitumes, dans des proportions choisies dans les intervalles définis précédemment, en opérant à des températures comprises entre 100°C et 230°C, plus particulièrement entre 120°C et 190°C, et sous agitation, pendant une durée d'au moins 10 minutes, généralement de l'ordre de quelques dizaines de minutes à quelques heures et par exemple de 10 minutes à 8 heures et plus particulièrement de 10 minutes à 5 heures pour former une masse homogène constituant la composition bitume/polymère (composante bitume /polymère) non réticulée et non fonctionnalisée. Lorsqu'un polymère additionnel, par exemple copolymère éthylène/acétate de vinyle ou encore polymère oléfinique fonctionnalisé par des groupements époxy ou COOH, est utilisé en plus du copolymère de styrène et de butadiène, ledit polymère additionnel peut être mis en contact avec le bitume ou mélange de bitumes avant ou après le copolymère de styrène et de butadiène ou même en même temps que ce dernier.

Lorsqu'on désire produire une composition bitume/polymère réticulée, on forme tout d'abord, en opérant comme indiqué ci-dessus, une composante bitume/polymère non réticulée consistant en un bitume ou mélange de bitumes renfermant le copolymère de styrène et de butadiène à l'état non réticulé et, le cas échéant, le ou les polymères additionnels éventuels, puis à ladite composante bitume/polymère non réticulée on incorpore l'agent de couplage donneur de soufre ou le composé peroxydé, en quantité appropriée choisie dans les intervalles définis plus haut pour ladite quantité, et l'on maintient le tout sous agitation à des températures comprises entre 100°C et 230°C, plus particulièrement entre 120°C et 190°C, et identiques ou non aux températures de préparation de la composante bitume/polymère non réticulée, pendant une durée d'au moins 10 minutes et généralement allant de 10 minutes à 5 heures, plus particulièrement de 30 minutes à 3 heures, pour former une masse de réaction constituant la composante bitume/polymère réticulée.

Lorsqu'on désire produire une composition bitume/polymère fonctionnalisé, on forme tout d'abord, en opérant comme indiqué ci-dessus, une composante bitume/polymère non fonctionnalisée consistant en un bitume ou mélange de bitumes renfermant le copolymere de styrène et de butadiène à l'état non réticulé et, le cas échéant, le ou les polymères additionnels éventuels, puis à ladite composante bitume/polymère non fonctionnalisé on incorpore l'agent de fonctionnalisation et ensuite, s'il est utilisé, le composé peroxydé, en quantités appropriées choisies dans les intervalles définis précédemment pour lesdites quantités, et on maintient le tout sous agitation à des températures comprises entre 100°C et 230°C, plus particulièrement entre 120°C et 190°C, et identiques ou non aux températures de formation de la composante bitume/polymère, pendant une durée au moins égale à 10 minutes et généralement allant de 10 minutes à 5 heures, plus particulièrement de 30 minutes à 3 heures, pour former un produit de réaction constituant la composition bitume/élastomère fonctionnalisé.

Au cours de sa constitution, la composition bitume/polymère non réticulée ou non fonctionnalisée (composante bitume/polymère) ou la composition bitume/polymère réticulée ou fonctionnalisée peut être encore additionnée de 1% à 40% et plus particulièrement de 2% à 30%, en poids du bitume, d'un agent fluxant, qui peut consister, notamment, en une huile hydrocarbonée présentant un intervalle de distillation à pression atmosphérique déterminé selon la norme ASTM D 86-67, compris entre 100°C et 600°C et situé plus spécialement entre 150°C et 400°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/polymère la contenant, de manière à retrouver les mêmes propriétés mécaniques qu'aurait présentées, après répandage à chaud, la composition bitume/polymère préparée sans utiliser d'agent fluxant. L'agent fluxant peut être ajouté au milieu que l'on forme à partir du bitume, du copolymère de styrène et de butadiène et, le cas échéant, du ou des polymères additionnels éventuels et de l'agent de couplage ou de l'agent de fonctionnalisation, à un moment quelconque de la constitution dudit milieu, la quantité d'agent fluxant étant choisie, dans les intervalles définis plus haut, pour être compatible avec l'usage final désiré sur le chantier.

Le produit de réaction constituant la composition bitume/polymère fonctionnalisé peut être avantageusement additionné, en opérant sous agitation à des températures comprises entre 100°C et 230°C et plus particulièrement entre 120°C et 190°C, d'un ou plusieurs additifs susceptibles de réagir avec les groupements fonctionnels acides carboxyliques ou esters carboxyliques portés par le copolymère de styrène et de butadiène et éventuellement par le bitume de la composition bitume/polymère fonctionnalisé pour activer ou renforcer la réticulation entre les chaînes macromoléculaires dudit copolymère ou/et entre lesdites chaînes macromoléculaires et le bitume et ainsi renforcer les caractéristiques physicomécaniques de la composition bitume/polymère fonctionnalisé. Ces additifs réactifs peuvent être en particulier des amines, notamment polyamines, primaires ou secondaires, des alcools, notamment polyols, des acides, notamment polyacides, ou encore des composés métalliques.

Des additifs réactifs du type amine sont, par exemple, des diamines aromatiques telles que diamino-1,4 benzène, diamino-2, 4 toluène, diaminonaphtalène, bis(amino-4 phényl) sulfone, bis (amino-4 phényl) éther, bis (amino-4 phényl) méthane, des diamines aliphatiques ou cycloaliphatiques telles que celles de formule $H_2N$ - $R_{13}$ -$NH_2$ où $R_{13}$ désigne un radical alkylène en $C_2$ à $C_{12}$ ou cycloalkylène en $C_6$ à $C_{12}$, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyl ou alkényl en $C_{12}$ à $C_{18}$ relié à l'atome d'azote d'un groupement amine.

Des additifs réactifs du type alcool sont, en particulier, des polyols tels que diols ou triols et notamment des diols de formule HO - $R_{14}$ - OH, où $R_{14}$ désigne un radical hydrocarboné, notamment un radical alkylène en $C_2$ à $C_{18}$, arylène en $C_6$ à $C_8$ et cycloalkylène en $C_6$ à $C_8$, et des polyétherdiols de formule HO-$(C_qH_{2q}\,O)_r$H où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octane diol, polybutadiène polyhydroxylé.

Des additifs réactifs du type acide sont, en particulier, des polyacides de formule HOOC - $R_{14}$ -COOH, où $R_{14}$ a la signification donnée plus haut. Des exemples de tels polyacides sont tels que acide phtalique, acide téréphtalique, acide malonique, acide succinique, acide adipique, acide glutarique, polybutadiène polycarboxylé.

Des additifs réactifs du type composé métallique sont, en particulier, des composés tels que hydroxydes, oxydes, alcoolates comme méthylates, éthylates, propylates butylates et notamment tertio-butylates, carboxylates comme formiates et acétates, nitrites, carbonates et bicarbonates de métaux des groupes I, II, III et VIII du Tableau Périodique des Eléments, notamment Na, K, Li, Mg, Ca, Cd, Zn, Ba, Al, Fe.

La quantité de l'additif réactif ou des additifs réactifs précités, que l'on incorpore au milieu réactionnel donnant naissance aux compositions bitume/polymère fonctionnalisé, peut aller de 0,01 % à 10 % et plus particulièrement de 0,05 % à 5 % du poids de bitume présent dans ledit milieu réactionnel.

On peut encore incorporer au milieu générant les compositions bitume/polymère, à un moment quelconque de la constitution dudit milieu, des additifs conventionnellement utilisés dans les compositions bitume/polymère tels que des promoteurs d'adhésion de la composition bitume/polymère aux surfaces minérales ou encore des charges comme le talc, le noir de carbone, les pneus usagés réduits en poudrette.

Dans une forme de mise en oeuvre de la préparation de la composition bitume/polymère utilisant une huile hydrocarbonée telle que définie plus haut, à titre d'agent fluxant, le copolymère de styrène et de butadiène et, s'ils sont présents, le ou les polymères additionnels et l'agent de couplage ou l'agent de fonctionnalisation sont incorporés au bitume ou mélange de bitumes sous la forme d'une solution mère de ces produits dans l'huile hydrocarbonée constituant l'agent fluxant.

La solution mère est préparée par mise en contact des ingrédients la composant, à savoir huile hydrocarbonée servant de solvant, copolymère de styrène et de butadiène et, si présents, polymère(s) additionnel(s) et agent de couplage ou de fonctionnalisation, sous agitation, à des températures comprises entre 10°C et 170°C et plus particulièrement entre 40°C et 120°C, pendant une durée suffisante, par exemple comprise entre 10 minutes et 2 heures, pour obtenir une dissolution complète des ingrédients polymériques et de l'agent de couplage ou de fonctionnalisation dans l'huile hydrocarbonée.

Les concentrations respectives du copolymère de styrène et de butadiène et, si présents, du ou des polymères additionnels et de l'agent de couplage ou de fonctionnalisation dans la solution mère peuvent varier assez largement en fonction, notamment, de la nature de l'huile hydrocarbonée utilisée pour dissoudre lesdits ingrédients polymères et l'agent de couplage. Avantageusement, la solution mère renferme une quantité de copolymère de styrène et de butadiène représentant entre 5% et 40% et plus particulièrement entre 10% et 30% du poids de l'huile hydrocarbonée. Lorsqu'il est présent dans la solution mère, l'agent de couplage ou l'agent de fonctionnalisation est utilisé en quantité comprise, notamment, entre 0,05% et 15% et plus particulièrement entre 0,1% et 8% du poids de l'huile hydrocarbonée, tandis que la quantité de composé peroxydé dans la solution mère peut représenter 0% à 15% du poids du copolymère de styrène et de butadiène contenu dans ladite solution mère.

Pour préparer les compositions bitume/polymère en faisant appel à la technique de la solution mère, on mélange la solution mère renfermant le copolymère de styrène et de butadiène et, si utilisés, le ou les polymères additionnels et l'agent de couplage ou de fonctionnalisation, avec le bitume ou mélange de bitumes en opérant à des tempéracures comprises entre 100°C et 230°C, plus particulièrement entre 120°C et 190°C, et sous agitation, ceci étant réalisé, par exemple, en incorporant la solution mère au bitume maintenu sous agitation aux températures entre 100°C et 230°C et plus particulièrement entre 120°C et 190°C, puis on maintient le mélange résultant sous agitation à des températures comprises entre 100°C et 230°C, plus particulièrement entre 120°C et 190°C, par exemple aux températures utilisées pour réaliser le mélange de la solution mère avec le bitume, pendant une durée au moins égale à 10 minutes, et généralement allant de 10 minutes à 2 heures, pour former un produit constituant la composition bitume/polymère.

La quantité de solution mère mélangée au bitume ou mélange de bitumes est choisie pour fournir les quantités

désirées, par rapport au bitume, de copolymère de styrène et de butadiène, de polymère(s) additionnel(s) et d'agent de couplage ou de fonctionnalisation, lesdites quantités étant dans les fourchettes définies précédemment.

Immédiatement après son obtention, la composition bitume/polymère produite par le procédé selon l'invention peut être soumise à un traitement au moyen d'un adjuvant acide, par exemple constitué d'au moins un acide choisi parmi l'acide phosphorique, l'acide sulfurique, les acides polyphosphoriques, les acides sulfoniques et les acides phosphoniques, comme décrit dans les citations FR-A-2718747 et FR-A-2739863.

Les compositions bitume/polymère obtenues par le procédé selon l'invention peuvent être utilisées telles quelles ou bien diluées avec des proportions variables d'un bitume ou mélange de bitumes ou d'une composition selon l'invention ayant des caractéristiques différentes pour constituer des liants bitume/polymère ayant une teneur choisie en copolymère de styrène et de butadiène, qui peut être soit égale (composition non diluée) ou bien inférieure (composition diluée) à la teneur en ledit copolymère des compositions bitume/polymère initiales correspondantes. La dilution des compositions bitume/polymère selon l'invention avec le bitume ou mélange de bitumes ou avec une composition selon l'invention de caractéristiques différentes peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère selon l'invention peut être choisi parmi les bitumes définis précédemment, comme convenant à la préparation des compositions bitume/polymère. Le cas échéant, le bitume ou mélange de bitumes utilisé pour la dilution peut avoir été lui-même préalablement traité par un adjuvant acide tel que mentionné ci-dessus.

La dilution d'une composition bitume/polymère par un bitume ou mélange de bitumes ou par une seconde composition selon l'invention à teneur plus faible en polymère (copolymère de styrène et de butadiène et, si présent, polymère additionnel), pour former un liant bitume/polymère à teneur choisie en polymère inférieure à celle de la composition bitume/polymère à diluer, est généralement réalisée en mettant en contact, sous agitation et à des températures comprises entre 100°C et 230°C et plus particulièrement entre 120°C et 190°C, des proportions convenables de la composition bitume/polymère à diluer et de bitume ou mélange de bitumes ou de seconde composition bitume/polymère selon l'invention.

Les liants bitume/polymère consistant en les compositions bitume/polymère selon l'invention ou résultant de la dilution desdites compositions par un bitume ou mélange de bitumes ou par une autre composition bitume/polymère selon l'invention, jusqu'à la teneur désirée en polymère(s) dans lesdits liants, sont applicables, directement ou après mise en émulsion aqueuse, à la réalisation de revêtements routiers, notamment du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

En outre, les caractéristiques rhéologiques et mécaniques des bitumes ou des compositions bitume/polymère auxquelles on fait référence dans ledits exemples, à savoir pénétrabilité, point de ramollissement Bille et Anneau, indice de PFEIFFER (IP) et caractéristiques en traction ($\sigma_r$ et $\varepsilon_r$), sont celles définies précédemment.

<u>EXEMPLES 1 A 9</u> :

On préparait des compositions témoins bitume/polymère (exemples 1 à 4), ainsi que des compositions bitume/polymère selon l'invention (exemples 5 à 9), pour en évaluer et comparer les caractéristiques physicomécaniques.

On opérait dans les conditions suivantes :

<u>Exemple 1 (témoin)</u> :

Dans un réacteur maintenu à 175°C et sous agitation, on introduisait 950 parties d'un bitume ayant une pénétrabilité, déterminée selon les modalités de la norme NF T 66004, égale à 65 et 50 parties d'un copolymère diséquencé de styrène et de butadiène (copolymère SB1)ayant une masse moléculaire en poids égale à 120000 et renfermant, en poids, 25% de styrène-et 75% de butadiéne, dont une quantité de motifs à double liaison 1,2 représentant 9% du copolymère. Le contenu du réacteur était ensuite maintenu à 175°C sous agitation pendant une durée égale à 2,5 heures pour former une masse homogène (composante bitume/polymère). A ladite masse, on ajoutait alors 1,3 partie de soufre et maintenait le milieu réactionnel ainsi formé à 175°C pendant 3 heures pour produire une composition bitume/polymère réticulée.

<u>Exemple 2 (témoin)</u> :

On préparait une composition bitume/polymère réticulée en opérant comme décrit dans l'exemple 1, puis on diluait ladite composition par une quantité appropriée du même bitume que celui utilisé dans l'exemple 1 pour obtenir

une composition bitume/polymère réticulée diluée renfermant 3,5% de copolymère SB1.

Exemple 3 (témoin) :

On préparait une composition bitume/polymère réticulée en opérant comme décrit dans l'exemple 1, avec toutefois remplacement du copolymère SB1 par un copolymère diséquencé de styrène et de butadiène à charnière statistique (copolymère SB3) ayant une masse moléculaire en poids égale à 280000 et renfermant 15% de styrène, dont 10% sous forme de bloc, et 85% de butadiène, dont 8% sous forme de motifs à double liaison 1,2.

Exemple 4 (témoin) :

On préparait une composition bitume/polymère réticulée en opérant comme décrit dans l'exemple 3, puis on diluait ladite composition par une quantité appropriée du même bitume que celui utilisé dans l'exemple 1 pour obtenir une composition bitume/polymère réticulée diluée renfermant 3,5% de copolymère SB3.

Exemple 5 (selon l'invention) :

On préparait une composition bitume/polymère réticulée en opérant comme décrit dans l'exemple 1, avec toutefois remplacement du copolymère SB1 par un copolymère diséquencé de styrène et de butadiène (copolymère SB5) ayant une masse moléculaire en poids égale à 120000 et renfermant 25% de styrène et 75% de butadiène, dont une quantité sous forme de motifs à double liaison 1,2 représentant 30% du copolymère.

Exemple 6 (selon l'invention) :

On préparait une composition bitume/polymère réticulée en opérant comme décrit dans l'exemple 5, puis on diluait ladite composition par une quantité appropriée du même bitume que celui utilisé dans l'exemple 1 pour obtenir une composition bitume/polymère réticulée diluée renfermant 3,5% de copolymère SB5.

Exemple 7 (selon l'invention) :

On préparait une composition bitume/polymère réticulée en opérant comme décrit dans l'exemple 1, avec toutefois remplacement du copolymère SB1 par un copolymère diséquencé de styrène et de butadiène à charnière statistique (copolymère SB7) ayant une masse moléculaire en poids égale à 150000 et renfermant 25% de styrène, dont 17% sous forme de bloc, et 75% de butadiène, dont une quantité sous forme de motifs à double liaison 1,2 représentant 35% du copolymère.

Exemple 8 (selon l'invention) :

On préparait une composition bitume/polymère réticulée en opérant comme décrit dans l'exemple 7, puis on diluait ladite composition par une quantité appropriée du même bitume que celui utilisé dans l'exemple 1 pour obtenir une composition bitume/polymère réticulée diluée renfermant 3,5% de copolymère SB7.

Exemple 9 (selon l'invention) :

On préparait une composition bitume/polymère fonctionnalisé en opérant comme décrit dans l'exemple 1, avec toutefois remplacement du soufre par 3 parties d'un agent de fonctionnalisation consistant en acide dithio-3,3' dipropionique de formule $HOOC-CH_2-CH_2-S-S-CH_2-CH_2-COOH$ et utilisation de 35 parties du copolymère diséquencé de styrène et de butadiène de l'exemple 7, pour obtenir une composition bitume/polymère fonctionnalisé renfermant 3,5% de copolymère.

Pour chacune des compositions préparées comme indiqué dans les exemples 1 à 9, on a déterminé les caractéristiques suivantes :

- pénétrabilité à 25°C (Pen.),
- température de ramollissement bille et anneau (TBA),
- indice de PFEIFFER (IP),
- contrainte $\sigma_r$ et allongement $\varepsilon_r$ à la rupture, l'essai de traction correspondant étant réalisé à 5°C avec une vitesse de 500 mm/minute.

Les résultats obtenus sont rassemblés dans le tableau ci-après.

Les teneurs des compositions en copolymère sont exprimées en pourcentages pondéraux des quantités globales de bitume et polymère.

Tableau

| Exemples | 1 | 2 | 3 | 4 | 5 | 6 | 7 | 8 | 9 |
|---|---|---|---|---|---|---|---|---|---|
| SB1 (%) | 5 | 3,5 | | | | | | | |
| SB3 (%) | | | 5 | 3,5 | | | | | |
| SB5 (%) | | | | | 5 | 3,5 | | | |
| SB7 (%) | | | | | | | 5 | 3,5 | 3,5 |
| Pen (1/10 mm) | 52 | 56 | 49 | 53 | 53 | 53 | 45 | 59 | 55 |
| TBA (°C) | 66,8 | 56 | 79,7 | 64 | 71,3 | 64 | 79,8 | 64,4 | 66 |
| IP | 2,2 | 0,6 | 4,2 | 1,9 | 3,2 | 1,9 | 4 | 2,1 | 2,4 |
| $\sigma_r$ (daN/ $cm^2$) | 13,7 | 10,8 | 13,5 | 11,5 | 14,1 | 12 | 16,5 | 14,2 | 14,5 |
| $\varepsilon_r$ (%) | >700 | >700 | >700 | >700 | >700 | >700 | >700 | >700 | >700 |

Au vu des caractéristiques rassemblées dans le tableau, il apparaît que :

- à masse moléculaire égale et teneur globale en butadiène identique, une plus forte proportion en motifs butadiène à double liaison 1,2 dans le copolymère styrène/butadiène conduit à une amélioration des caractéristiques physiques (augmentation de la valeur de TBA, de l'indice de pénétrabilité et de l'indice de PFEIFFER) de la composition bitume/polymère réticulée, comme il ressort d'une comparaison des résultats des exemples 5 et6 selon l'invention aux résultats des exemples témoins 1 et 2 respectivement correspondants ;
- pour un copolymère styrène/butadiène de masse moléculaire relativement élevée, une plus forte proportion de motifs butadiène à double liaison 1,2 dans le copolymère améliore très nettement les propriétés physiques de la composition bitume/polymère réticulée incluant ledit copolymère, jusqu'à dépasser les propriétés correspondantes d'une composition bitume/polymère réticulée obtenue à partir d'un copolymère styrène/butadiène de très haute masse moléculaire, comme il ressort d'une comparaison des résultats des exemples 7 et 8 aux résultats des exemples témoins 3 et 4 respectivement correspondants

Plus généralement, il apparaît que l'utilisation selon l'invention d'un copolymère styrène/butadiène, notamment d'un copolymère séquencé styrène/butadiène, ayant la teneur pondérale globale en butadiène et la teneur particulière en motifs butadiène à double liaison 1,2 définies plus haut, dans la préparation de compositions bitume/polymère réticulées se traduit par une amélioration sensible de la consistance et des propriétés élastomériques desdites compositions bitume/polymère.

## Revendications

1. Procédé de préparation de compositions bitume/polymère, à propriétés mécaniques renforcées, dans lequel on met en contact, en opérant à des températures comprises entre 100°C et 230°C et sous agitation pendant une durée d'au moins 10 minutes, un bitume ou mélange de bitumes avec, comptés en poids du bitume ou mélange de bitumes, 0,1% à 30% d'un copolymère de styrène et de butadiène renfermant 50% à 95% de motifs issus du butadiène, ledit procédé **se caractérisant en ce que** le copolymère de styrène et de butadiène possède une proportion de motifs à double liaison 1,2 issus du butadiène comprise entre 12% et 50% en poids dudit copolymère.

2. Procédé selon la revendication 1, **caractérisé en ce que** le copolymère de styrène et de butadiène renferme 20% à 40% en poids de motifs à double liaison 1,2 issus du butadiène.

3. Procédé selon la revendication 1 ou 2, **caractérisé en ce que** le copolymère de styrène et de butadiène renferme 60% à 95% de motifs issus du butadiène.

4. Procédé selon l'une des revendications 1 à 3, **caractérisé en ce que** le copolymère de styrène et de butadiène

est un copolymère séquencé linéaire ou étoilé, avec ou sans charnière statistique.

5. Procédé selon l'une des revendications 1 à 4, **caractérisé en ce que** le copolymère de styrène et de butadiène présente une masse moléculaire en poids comprise entre 10000 et 600000 daltons et située, de préférence entre 30000 et 400000 daltons.

6. Procédé selon l'une des revendications 1 à 5, **caractérisé en ce que** la quantité de copolymère de styrène et de butadiène utilisée représente 0,3% à 20% et plus particulièrement 0,5% à 10% du poids du bitume ou mélange de bitumes.

7. Procédé selon l'une des revendications 1 à 6, **caractérisé en ce que** le bitume ou mélange de bitumes est choisi parmi les bitumes ayant une viscosité cinématique à 100°C comprise entre $0,5x10^{-4}$ $m^2/s$ et $3x10^{-2}$ $m^2/s$ et plus spécialement entre $1x10^{-4}$ $m^2/s$ et $2x10^{-2}$ $m^2/s$.

8. Procédé selon la revendication 7, **caractérisé en ce que** le bitume ou mélange de bitumes présente une pénétrabilité à 25°C, définie selon la norme NF T 66004, comprise entre 5 et 900 et de préférence entre 10 et 400.

9. Procédé selon l'une des revendications 1 à 8, **caractérisé en ce que** l'on incorpore à la composition bitume/polymère, au cours de sa préparation, un ou plusieurs polymères additionnels différents du copolymère de styrène et de butadiène, la quantité globale de polymère(s) additionnel(s) étant avantageusement comprise entre 0,3% et 20% et plus particulièrement entre 0,5% et 10% du poids du bitume de ladite composition.

10. Procédé selon l'une des revendications 1 à 9, **caractérisé en ce que** la masse de bitume ou mélange de bitumes et de copolymère de styrène et de butadiène, que l'on maintient à des températures comprises entre 100°C et 230°C pour former la composition bitume/polymère, renferme également un agent réticulant choisi dans le groupe formé par (i) les agents de couplage donneur de soufre, (ii) les agents de fonctionnalisation pris parmi les acides ou esters carboxyliques à groupements thiols ou disulfures et (iii) les composés peroxydés générant des radicaux libres aux températures comprises entre 100°C et 230°C .

11. Procédé selon la revendication 10, **caractérisé en ce que** l'agent réticulant est un agent de couplage donneur de soufre pour produire une composition bitume/polymère réticulée, ledit agent de couplage donneur de soufre étant choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

12. Procédé selon la revendication 11, **caractérisé en ce que** l'agent de couplage donneur de soufre est choisi parmi (i) les produits M, qui renferment, en poids, de 0 % à 100 % d'une composante CA consistant en un ou plusieurs accélérateurs de vulcanisation donneurs de soufre et de 100 % à 0 % d'une composante CB consistant en un ou plusieurs agents de vulcanisation choisis parmi le soufre élémentaire et les polysulfures d'hydrocarbyle, et (ii) les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

13. Procédé selon l'une des revendications 10 à 12, **caractérisé en ce que** l'agent de couplage est utilisé en quantité propre à fournir une quantité de soufre libre représentant 0,1 % à 20 % et de préférence 0,5% à 10% du poids du copolymère de styrène et de butadiène utilisé pour produire la composition bitume/polymère réticulée.

14. Procédé selon la revendication 10, **caractérisé en ce que** l'agent réticulant est un agent de fonctionnalisation acide ou ester carboxylique à groupements thiols ou disulfures pour former une composition bitume/polymère fonctionnalisé, ledit agent de fonctionnalisation étant choisi parmi les composés de formule

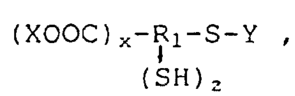

dans laquelle Y désigne un atome d'hydrogène ou un reste monovalent

$$-S-R_1(SH)_z-(COOX)_x,$$

$R_1$ désigne un radical hydrocarboné (x+z+1)-valent en $C_1$ à $C_{12}$, de préférence en $C_1$ à $C_8$, X représente H ou un radical hydrocarboné monovalent R en $C_1$ à $C_{12}$ et de préférence en $C_1$ à $C_8$, z est égal à zéro ou un et x est un nombre entier ayant une valeur allant de 1 à 3 et de préférence égale à 1 ou 2, avec $x+y \leq 3$.

**15.** Procédé selon la revendication 14, **caractérisé en ce que** l'agent de fonctionnalisation est utilisé en quantité comprise entre 0,01% et 6% et plus spécialement entre 0,05% et 3% du poids du bitume ou mélange de bitumes employé pour produire la composition bitume/polymère fonctionnalisé.

**16.** Procédé selon la revendication 10, **caractérisé en ce que** l'agent réticulant est un composé peroxydé générant des radicaux libres aux températures comprises entre 100°C et 230°C utilisé seul pour former une composition bitume/polymère réticulée ou en association avec l'agent de fonctionnalisation pour former une composition bitume/polymère fonctionnalisé, ledit composé peroxydé étant en particulier un peroxyde de dihydrocarbyle.

**17.** Procédé selon la revendication 16, **caractérisé en ce que** le composé peroxydé est utilisé en quantité allant jusqu'à 15% en poids du copolymère de styrène et de butadiène.

**18.** Procédé selon l'une des revendications 1 à 9, **caractérisé en ce que** la composition bitume/polymère est préparée en mettant en contact le copolymère de styrène et de butadiène et, en cas d'utilisation, le ou les polymères additionnels, avec le bitume ou mélange de bitumes, dans les proportions désirées, en opérant à des températures comprises entre 100°C et 230°C, plus particulièrement entre 120°C et 190°C, et sous agitation, pendant une durée d'au moins 10 minutes et plus particulièrement de 10 minutes à 5 heures.

**19.** Procédé selon l'une des revendications 10 à 17, **caractérisé en ce que** la composante bitume/polymère réticulée ou fonctionnalisée est préparée en mettant en contact le copolymère de styrène et de butadiène et, en cas d'utilisation le ou les polymères additionnels, avec le bitume ou mélange de bitumes, dans les proportions désirées, en opérant à des températures comprises entre 100°C et 230°C, plus particulièrement entre 120°C et 190°C, et sous agitation, pendant une durée d'au moins 10 minutes et plus particulièrement de 10 minutes à 5 heures, puis au produit obtenu, constituant une composante bitume/polymère non réticulée, on incorpore l'agent de couplage ou de fonctionnalisation, en quantité désirée, et l'on maintient le tout sous agitation à des températures comprises entre 100°C et 230°C, plus particulièrement entre 120°C et 190°C, pendant une durée d'au moins 10 minutes et, notamment, allant de 10 minutes à 5 heures et plus particulièrement de 10 minutes à 3 heures pour former une masse de réaction constituant la composante bitume/polymère réticulée ou fonctionnalisée.

**20.** Procédé selon l'une des revendications 1 à 19, **caractérisé en ce que**, au cours de sa préparation, la composition bitume/polymère est additionnée de 1 % à 40 % et plus particulièrement de 2 % à 30 %, en poids du bitume, d'un agent fluxant.

**21.** Procédé selon la revendication 20, **caractérisé en ce que** l'agent fluxant consiste en une huile hydrocarbonée présentant un intervalle de distillation à pression atmosphérique, déterminé selon la norme ASTM D 86-67, compris entre 100°C et 600°C et situé plus spécialement entre 150°C et 400°C, ladite huile hydrocarbonée étant, en particulier, une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale.

**22.** Procédé selon la revendication 21, **caractérisé en ce que** le copolymère de styrène et de butadiène et, s'ils sont présents, le ou les polymères additionnels et l'agent de couplage ou de fonctionnalisation sont incorporés au bitume ou mélange de bitumes sous la forme d'une solution mère de ces produits dans l'huile hydrocarbonée constituant l'agent fluxant.

**23.** Procédé selon la revendication 22 , **caractérisé en ce que** l'on mélange la solution mère avec le bitume ou mélange de bitumes en opérant à des températures comprises entre 100°C et 230°C, plus particulièrement entre 120°C et 190°C, et sous agitation, puis on maintient le mélange résultant sous agitation à des températures comprises entre 100°C et 230°C, plus particulièrement entre 120°C et 190°C, pendant une durée d'au moins 10 minutes et,

notamment, allant de 10 minutes à 2 heures, pour produire la composition bitume/polymère.

**24.** Procédé selon la revendication 14 ou 15, **caractérisé en ce que**, au cours de sa préparation, la composition bitume/polymère est additionnée d'un ou plusieurs additifs susceptibles de réagir avec les groupements fonctionnels du copolymère fonctionnalisé de styrène et de butadiène, lesdits additifs réactifs étant en particulier des amines, notamment polyamines, primaires ou secondaires, des alcools et notamment des polyols, des acides et notamment des polyacides, ou encore des composés métalliques, notamment composés de métaux des groupes I, II, III et VIII du Tableau Périodique des Eléments.

**25.** Procédé selon la revendication 24, **caractérisé en ce que** la quantité d'additif réactif ou d'additifs réactifs incorporée au milieu, donnant naissance à la composition bitume/polymère, représente 0,01 % à 10 % et de préférence 0,05 % à 5 % du poids du bitume ou mélange de bitumes.

**26.** Application des compositions bitume/polymère obtenues par le procédé selon l'une des revendications 1 à 25, à la production de liants bitume/polymère, lesdits liants consistant en lesdites compositions utilisées telles quelles ou bien étant formés par dilution desdites compositions bitume/polymère par un bitume ou mélange de bitumes ou par une composition bitume/polymère selon l'une des revendications 1 à 25 à teneur globale plus faible en polymère, lesquels liants bitume/polymère sont notamment utilisables, directement ou après mise en émulsion aqueuse, à la réalisation de revêtements, notamment revêtements routiers du type enduit superficiel, à la production d'enrobés mis en place à chaud ou à froid, ou encore à la réalisation de revêtements d'étanchéité.

**27.** Solution mère, utilisable notamment pour la préparation de compositions bitume/polymère, comprenant (i) une huile hydrocarbonée, qui présente un intervalle de distillation à pression atmosphérique, déterminé selon la norme ASTM D 86-87, compris entre 100°C et 600°C et plus particulièrement entre 150°C et 400°C et (ii) un copolymère de styrène et de butadiène renfermant 50% à 95% en poids de motifs issus du butadiène, **caractérisée en ce que** le copolymère de styrène et de butadiène possède une proportion de motifs à double liaison 1,2 issus du butadiène comprise entre 12% et 50% en poids dudit copolymère.

**28.** Solution mère selon la revendication 27, **caractérisée en ce que** le copolymère de styrène et de butadiène renferme 20% à 40% en poids de motifs à double liaison 1,2 issus du butadiène.

**29.** Solution mère selon la revendication 27 ou 28, **caractérisée en ce que** le copolymère de styrène et de butadiène renferme 60% à 95% de motifs issus du butadiène.

**30.** Solution mère selon l'une des revendications 27 à 29, **caractérisée en ce que** le copolymère de styrène et de butadiène est un copolymère séquencé linéaire ou étoilé, avec ou sans charnière statistique.

**31.** Solution mère selon l'une des revendications 27 à 30, **caractérisée en ce que** le copolymère de styrène et de butadiène présente une masse moléculaire en poids comprise entre 10000 et 600000 daltons et située, de préférence entre 30000 et 400000 daltons.

**32.** Solution mère selon l'une des revendications 27 à 31, **caractérisée en ce qu'**elle renferme une quantité de copolymère de styrène et de butadiène représentant entre 5% et 40% et plus particulièrement entre 10% et 30% du poids de l'huile hydrocarbonée.

**33.** Solution mère selon l'une des revendications 27 à 32, **caractérisée en ce qu'**elle renferme également un agent réticulant consistant en au moins un composé choisi dans le groupe formé par (i) les agents de couplage donneur de soufre, (ii) les agents de fonctionnalisation pris parmi les acides ou esters carboxyliques à groupements thiols ou disulfures et (iii) les composés peroxydés générant des radicaux libres aux températures comprises entre 100°C et 230°C .

**34.** Solution mère selon la revendication 33, **caractérisée en ce qu'**elle renferme, en poids de l'huile hydrocarbonée, entre 0,05% et 15% et plus particulièrement entre 0,1% et 8% d'agent de couplage donneur de soufre ou d'agent de fonctionnalisation et, en poids du copolymère, 0% à 15% du composé peroxydé.

## Claims

1. Process for the preparation of polymer/bitumen compositions with reinforced mechanical properties, in which a bitumen or mixture of bitumens is brought into contact, the operation being carried out at temperatures of between 100°C and 230°C and with stirring for a period of time of at least 10 minutes, with, with respect to the weight of the bitumen or mixture of bitumens, 0.1% to 30% of a copolymer of styrene and of butadiene containing 50% to 95% of units resulting from butadiene, the said process being **characterized in that** the copolymer of styrene and of butadiene has a proportion of units containing a 1,2 double bond resulting from butadiene of between 12% and 50% by weight of the said copolymer.

2. Process according to Claim 1, **characterized in that** the copolymer of styrene and of butadiene contains 20% to 40% by weight of units containing a 1,2 double bond resulting from butadiene.

3. Process according to Claim 1 or 2, **characterized in that** the copolymer of styrene and of butadiene contains 60% to 95% of units resulting from butadiene.

4. Process according to one of Claims 1 to 3, **characterized in that** the copolymer of styrene and of butadiene is a linear or star block copolymer, with or without a random junction.

5. Process according to one of Claims 1 to 4, **characterized in that** the copolymer of styrene and of butadiene exhibits a weight-average molecular mass of between 10,000 and 600,000 daltons and preferably between 30,000 and 400,000 daltons.

6. Process according to one of Claims 1 to 5, **characterized in that** the amount of copolymer of styrene and of butadiene used represents 0.3% to 20% and more particularly 0.5% to 10% of the weight of the bitumen or mixture of bitumens.

7. Process according to one of Claims 1 to 6, **characterized in that** the bitumen or mixture of bitumens is chosen from bitumens having a kinematic viscosity at 100°C of between $0.5 \times 10^{-4}$ $m^2/s$ and $3 \times 10^{-2}$ $m^2/s$ and more especially between $1 \times 10^{-4}$ $m^2/s$ and $2 \times 10^{-2}$ $m^2/s$.

8. Process according to Claim 7, **characterized in that** the bitumen or mixture of bitumens exhibits a penetrability at 25°C, defined according to NF Standard T 66004, of between 5 and 900 and preferably between 10 and 400.

9. Process according to one of Claims 1 to 8, **characterized in that**, during the preparation of the polymer/bitumen composition, one or more additional polymers, other than the copolymer of styrene and of butadiene, are incorporated therein, the overall amount of additional polymer(s) advantageously being between 0.3% and 20% and more particularly between 0.5% and 10% of the weight of the bitumen in the said composition.

10. Process according to one of Claims 1 to 9, **characterized in that** the mass of bitumen or mixture of bitumens and of copolymer of styrene and of butadiene, which is maintained at temperatures of between 100°C and 230°C in order to form the polymer/bitumen composition, also contains a crosslinking agent chosen from the group formed by (i) sulphur-donor coupling agents, (ii) functionalization agents taken from carboxylic acids or esters containing thiol or disulphide groups and (iii) peroxide compounds which generate free radicals at temperatures of between 100°C and 230°C.

11. Process according to Claim 10, **characterized in that** the crosslinking agent is a sulphur-donor coupling agent in order to produce a crosslinked polymer/bitumen composition, the said sulphur-donor coupling agent being chosen from the group formed by elemental sulphur, hydrocarbyl polysulphides, sulphur-donor vulcanization accelerators or mixtures of such products with one another and/or with vulcanization accelerators which are not sulphur donors.

12. Process according to Claim 11, **characterized in that** the sulphur-donor coupling agent is chosen from (i) the products M, which contain, by weight, from 0% to 100% of a component CA composed of one or more sulphur-donor vulcanization accelerators and from 100% to 0% of a component CB composed of one or more vulcanization agents chosen from elemental sulphur and hydrocarbyl polysulphides, and (ii) the products N, which contain a component CC composed of one or more vulcanization accelerators which are not sulphur donors and a product M in a ratio by weight of the component CC to the product M ranging from 0.01 to 1 and preferably from 0.05 to 0.5.

**13.** Process according to one of Claims 10 to 12, **characterized in that** the coupling agent is used in an amount appropriate for providing an amount of free sulphur representing 0.1% to 20% and preferably 0.5% to 10% of the weight of the copolymer of styrene and of butadiene used to produce the crosslinked polymer/bitumen composition.

**14.** Process according to Claim 10, **characterized in that** the crosslinking agent is a carboxylic acid or ester containing thiol or disulphide groups functionalization agent for forming a functionalized polymer/bitumen composition, the said functionalization agent being chosen from compounds of formula

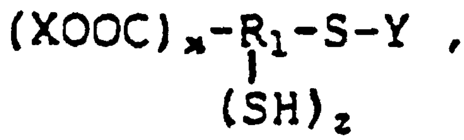

in which Y denotes a hydrogen atom or a monovalent residue

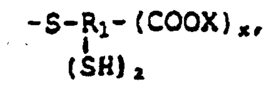

$R_1$ denotes an (x+z+1)-valent-$C_1$ to $C_{12}$, preferably $C_1$ to $C_8$, hydrocarbon radical, X represents H or a monovalent $C_1$ to $C_{12}$ and preferably $C_1$ to $C_8$ hydrocarbon radical, z is equal to zero or one and x is an integer having a value ranging from 1 to 3 and preferably equal to 1 or 2, with $x+y \leq 3$.

**15.** Process according to Claim 14, **characterized in that** the functionalization agent is used in an amount of between 0.01% and 6% and more especially between 0.05% and 3% of the weight of the bitumen or mixture of bitumens employed, in order to produce the functionalized polymer/bitumen composition.

**16.** Process according to Claim 10, **characterized in that** the crosslinking agent is a peroxide compound which generates free radicals at temperatures of between 100°C and 230°C used alone, in order to form a crosslinked polymer/bitumen composition, or in combination with the functionalization agent, in order to form a functionalized polymer/bitumen composition, the said peroxide compound being in particular a dihydrocarbyl peroxide.

**17.** Process according to Claim 16, **characterized in that** the peroxide compound is used in an amount ranging up to 15% by weight of the copolymer of styrene and of butadiene.

**18.** Process according to one of Claims 1 to 9, **characterized in that** the polymer/bitumen composition is prepared by bringing the copolymer of styrene and of butadiene and, in the event of use, the additional polymer or polymers into contact with the bitumen or mixture of bitumens, in the desired proportions, the operation being carried out at temperatures of between 100°C and 230°C, more particularly between 120°C and 190°C, and with stirring, for a period of time of at least 10 minutes and more particularly of 10 minutes to 5 hours.

**19.** Process according to one of Claims 10 to 17, **characterized in that** the crosslinked or functionalized polymer/bitumen component is prepared by bringing the copolymer of styrene and of butadiene and, in the event of use, the additional polymer or polymers into contact with the bitumen or mixture of bitumens, in the desired proportions, the operation being carried out at temperatures of between 100°C and 230°C, more particularly between 120°C and 190°C, and with stirring, for a period of time of at least 10 minutes and more particularly of 10 minutes to 5 hours, the coupling or functionalization agent is then incorporated, in the desired amount, in the product obtained, which constitutes a non-crosslinked polymer/bitumen component, and the whole mixture is kept stirring at temperatures of between 100°C and 230°C, more particularly between 120°C and 190°C, for a period of time of at least 10 minutes and, in particular, ranging from 10 minutes to 5 hours and more particularly from 10 minutes to 3 hours, to form a reaction mass constituting the crosslinked or functionalized polymer/bitumen component.

**20.** Process according to one of Claims 1 to 19, **characterized in that**, during its preparation, the polymer/bitumen composition has added to it 1% to 40% and more particularly 2% to 30%, by weight of the bitumen, of a fluxing agent.

**21.** Process according to Claim 20, **characterized in that** the fluxing agent is composed of a hydrocarbon oil which has an atmospheric pressure distillation range, determined according to ASTM Standard D 86-67, of between 100°C and 600°C and lying more especially between 150°C and 400°C, the said hydrocarbon oil being, especially, a petroleum cut of aromatic nature, a petroleum cut of naphtheno-aromatic nature, a petroleum cut of naphtheno-paraffinic nature, a petroleum cut of paraffinic nature, a coal oil or alternatively an oil of plant origin.

**22.** Process according to Claim 21, **characterized in that** the copolymer of styrene and of butadiene and, if they are present, the additional polymer or polymers and the coupling or functionalization agent are incorporated in the bitumen or mixture of bitumens in the form of a mother solution of these products in the hydrocarbon oil constituting the fluxing agent.

**23.** Process according to Claim 22, **characterized in that** the mother solution is mixed with the bitumen or mixture of bitumens, the operation being carried out at temperatures of between 100°C and 230°C, more particularly between 120°C and 190°C, and with stirring, and then the resulting mixture is kept stirring at temperatures of between 100°C and 230°C, more particularly between 120°C and 190°C, for a period of time of at least 10 minutes and, in particular, ranging from 10 minutes to 2 hours, to produce the polymer/bitumen composition.

**24.** Process according to Claim 14 or 15, **characterized in that**, during its preparation, the polymer/bitumen composition has added to it one or more additives capable of reacting with the functional groups of the functionalized copolymer of styrene and of butadiene, the said reactive additives being in particular primary or secondary amines, especially polyamines, alcohols and especially polyols, acids and especially polyacids, or metal compounds, especially compounds of metals from groups I, II, III and VIII of the Periodic Table of the Elements.

**25.** Process according to Claim 24, **characterized in that** the amount of reactive additive or of reactive additives incorporated in the mixture giving rise to the polymer/bitumen composition represents 0.01% to 10% and preferably 0.05% to 5% of the weight of the bitumen or mixture of bitumens.

**26.** Application of the polymer/bitumen compositions obtained by the process according to one of Claims 1 to 25 to the production of polymer/bitumen binders, the said binders being composed of the said compositions used as they are or else being formed by dilution of the said polymer/bitumen compositions by a bitumen or mixture of bitumens or by a polymer/bitumen composition according to one of Claims 1 to 25 with an overall lower content of polymer, which polymer/bitumen binders can be used in particular, directly or after conversion into aqueous emulsion, in the production of coatings, in particular road surfacings of the surface coating type, in the production of bituminous mixes which are put in place with heating or cold, or else in the production of watertight facings.

**27.** Mother solution, which can be used in particular for the preparation of polymer/bitumen compositions, comprising (i) a hydrocarbon oil which exhibits an atmospheric pressure distillation range, determined according to ASTM Standard D 86-87, of between 100°C and 600°C and more particularly between 150°C and 400°C and (ii) a copolymer of styrene and of butadiene containing 50% to 95% by weight of units resulting from butadiene, **characterized in that** the copolymer of styrene and of butadiene has a proportion of units containing a 1,2 double bond resulting from butadiene of between 12% and 50% by weight of the said copolymer.

**28.** Mother solution according to Claim 27, **characterized in that** the copolymer of styrene and of butadiene contains 20% to 40% by weight of units containing a 1,2 double bond resulting from butadiene.

**29.** Mother solution according to Claim 27 or 28, **characterized in that** the copolymer of styrene and of butadiene contains 60% to 95% of units resulting from butadiene.

**30.** Mother solution according to one of Claims 27 to 29, **characterized in that** the copolymer of styrene and of butadiene is a linear or star block copolymer, with or without a random junction.

**31.** Mother solution according to one of Claims 27 to 30, **characterized in that** the copolymer of styrene and of butadiene exhibits a weight-average molecular mass of between 10,000 and 600,000 daltons and preferably between 30,000 and 400,000 daltons.

**32.** Mother solution according to one of Claims 27 to 31, **characterized in that** it contains an amount of copolymer of styrene and of butadiene representing between 5% and 40% and more particularly between 10% and 30% of the weight of the hydrocarbon oil.

**33.** Mother solution according to one of Claims 27 to 32, **characterized in that** it also contains a crosslinking agent composed of at least one compound chosen from the group formed by (i) sulphur-donor coupling agents, (ii) functionalization agents taken from carboxylic acids or esters containing thiol or disulphide groups and (iii) peroxide compounds which generate free radicals at temperatures of between 100°C and 230°C.

**34.** Mother solution according to Claim 33, **characterized in that** it contains, by weight of the hydrocarbon oil, between 0.05% and 15% and more particularly between 0.1% and 8% of sulphur-donor coupling agent or of functionalization agent and, by weight of the copolymer, 0% to 15% of the peroxide compound.

**Patentansprüche**

**1.** Verfahren zur Herstellung von Bitumen/Polymer-Zusammensetzungen mit mechanisch verstärkten Eigenschaften, bei dem für eine Dauer von mindestens 10 Minuten unter Bewegung bei Betriebstemperaturen von zwischen einschließlich 100°C und 230°C ein Bitumen oder eine Bitumenmischung mit - gerechnet als Gewicht in Bezug auf das Bitumen oder die Bitumenmischung - 0,1% bis 30% eines Copolymeren von Styrol und Butadien, welches 50% bis 95% von Butadien stammenden Einheiten umfaßt, in Kontakt gebracht wird, wobei das Verfahren **dadurch gekennzeichnet ist, daß** das Copolymer von Styrol und Butadien einen Anteil von Einheiten mit 1,2-Doppelbindung, die von Butadien stammen, zwischen einschließlich 12 Gew.-% und 50 Gew.-% des Copolymeren besitzt.

**2.** Verfahren gemäß Anspruch 1, **dadurch gekennzeichnet, daß** das Copolymere von Styrol und Butadien 20 Gew.-% bis 40 Gew.-% der Einheiten mit 1,2-Doppelbindung, die von Butadien stammen, umfaßt.

**3.** Verfahren gemäß Anspruch 1 oder 2, **dadurch gekennzeichnet, daß** das Copolymere von Styrol und Butadien 60% bis 95% der Einheiten, die von Butadien stammen, umfaßt.

**4.** Verfahren gemäß einem der Ansprüche 1 bis 3, **dadurch gekennzeichnet, daß** das Copolymere von Styrol und Butadien ein in linearer oder sternenförmiger Sequenz gebildetes Copolymer, mit oder ohne statistischer Gelenkbildung, ist.

**5.** Verfahren gemäß einem der Ansprüche 1 bis 4, **dadurch gekennzeichnet, daß** das Copolymere von Styrol und Butadien eine Gewichts-Molekularmasse von zwischen einschließlich 10.000 und 600.000 Dalton darstellt und vorzugsweise zwischen 30.000 und 400.000 Dalton liegt.

**6.** Verfahren gemäß einem der Ansprüche 1 bis 5, **dadurch gekennzeichnet, daß** die verwendete Menge des Copolymeren von Styrol und Butadien 0,3% bis 20% und insbesondere 0,5% bis 10% des Gewichts des Bitumens oder der Bitumenmischung darstellt.

**7.** Verfahren gemäß einem der Ansprüche 1 bis 6, **dadurch gekennzeichnet, daß** das Bitumen oder die Bitumenmischung unter den Bitumen ausgewählt wird, die eine kinematische Viskosität bei 100°C von zwischen einschließlich $0,5x10^{-4}$ $m^2/s$ und $3x10^{-2}$ $m^2/s$ und insbesondere zwischen $1x10^{-4}$ $m^2/s$ und $2x10^{-2}$ $m^2/s$ aufweisen.

**8.** Verfahren gemäß Anspruch 7, **dadurch gekennzeichnet, daß** das Bitumen oder die Bitumenmischung eine Durchdringbarkeit bei 25°C, die gemäß der Norm NF T 66004 definiert ist, von zwischen einschließlich 5 und 900 und vorzugsweise zwischen 10 und 400 zeigt.

**9.** Verfahren gemäß einem der Ansprüche 1 bis 8, **dadurch gekennzeichnet, daß** zur Bitumen/Polymer-Zusammensetzung im Verlauf ihrer Herstellung ein oder mehrere zusätzliche Polymere, die sich vom Copolymer des Styrols und des Butadiens unterscheiden, zugefügt wird, wobei die Gesamtmenge des (der) zusätzlichen Polymere (n) vorteilhafterweise zwischen einschließlich 0,3% und 20% und insbesondere zwischen 0,5% und 10% des Gewichts des Bitumens der besagten Zusammensetzung darstellt.

**10.** Verfahren gemäß einem der Ansprüche 1 bis 9, **dadurch gekennzeichnet, daß** die Masse des Bitumens oder der Bitumenmischung sowie des Copolymeren von Styrol und Butadien, die bei Temperaturen von zwischen einschließlich 100°C und 230°C zur Bildung der Bitumen/Polymer-Zusammensetzung gehalten wird, ebenfalls ein Vernetzungsmittel umfaßt, welches aus der Gruppe ausgewählt wird, die durch (i) Schwefeldonor-Kopplungsmittel, (ii) Funktionalisierungsmittel, die aus den Carboxylsäuren oder -estern mit Thiol oder Dischwefel-Gruppen herausgegriffen werden, und (iii) Peroxid-Verbindungen, die bei Temperaturen von zwischen einschließlich 100°C und 230°C freie Radikale bilden, gebildet wird.

**11.** Verfahren gemäß Anspruch 10, **dadurch gekennzeichnet, daß** das Vernetzungsmittel ein Schwefeldonor-Kopplungsmittel zum Erzeugen einer vernetzten Bitumen/Polymer-Zusammensetzung ist, wobei das Schwefeldonor-Kopplungsmittel aus der Gruppe ausgewählt wird, die durch elementaren Schwefel, Polyschwefel-Kohlenwasserstoffen, Schwefeldonor-Vulkanisierbeschleunigern, den Mischungen dieser Erzeugnisse untereinander und/oder mit nicht Schwefel donierenden Vulkanisationsbeschleunigern gebildet wird.

**12.** Verfahren gemäß Anspruch 11, **dadurch gekennzeichnet, daß** das Schwefeldonor-Kopplungsmittel ausgewählt wird unter (i) den Erzeugnissen M, die, bezogen auf Gewicht, 0% bis 100% eines Bestandteils CA, der aus einem oder mehreren Schwefeldonor-Vulkanisationsbeschleunigern besteht, und 100% bis 0% eines Bestandteils CB, der aus einem oder mehreren, unter elementarem Schwefel und Polyschwefel-Kohlenwasserstoffen ausgewählten Vulkanisationsmitteln besteht, umfaßt, und (ii) den Erzeugnissen N, die einen Bestandteil CC, der aus einem oder mehreren nicht Schwefel donierenden Vulkanisationsbeschleunigern besteht, und ein Erzeugnis M umfassen in einem Gewichtsverhältnis des Bestandteils CC im Erzeugnis M im Bereich von 0,01 bis 1 und vorzugsweise von 0,05 bis 0,5.

**13.** Verfahren gemäß einem der Ansprüche 10 bis 12, **dadurch gekennzeichnet, daß** das Kopplungsmittel in einer Menge verwendet wird, die zur Lieferung einer Menge an freiem Schwefel geeignet ist, die 0,1% bis 20% und vorzugsweise 0,5% bis 10% des Gewichts des Copolymeren von Styrol und Butadien, das zum Herstellen der vernetzten Bitumen/Polymer-Zusammensetzung verwendet wurde, entspricht.

**14.** Verfahren gemäß Anspruch 10, **dadurch gekennzeichnet, daß** das Vernetzungsmittel ein Carboxylsäure- oder -Ester-Funktionalisierungsmittel mit Thiol- oder Dischwefel-Gruppen ist zum Bilden einer funktionalisierten Bitumen/Polymer-Zusammensetzung, wobei das Funktionalisierungsmittel ausgewählt wird unter den Verbindungen der Formel

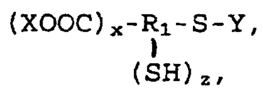

worin Y ein Wasserstoffatom oder einen monovalenten Rest

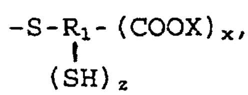

$R_1$ bezeichnet, wobei $R_1$ ein Kohlenwasserstoffradikal der Valenz (x+z+1) mit $C_1$ bis $C_{12}$, vorzugsweise mit $C_1$ bis $C_8$ bezeichnet, X H oder einen monovalenten Kohlenwasserstoffrest R mit $C_1$ bis $C_{12}$ und vorzugsweise mit $C_1$ bis $C_8$ wiedergibt, z gleich 0 oder 1 ist und x eine ganze Zahl mit einem Wert von 1 bis 3 und vorzugsweise gleich 1 oder 2 ist, wobei $x+y \leq 3$.

**15.** Verfahren gemäß Anspruch 14, **dadurch gekennzeichnet, daß** das Funktionalisierungsmittel in einer Menge verwendet wird, die zwischen einschließlich 0,01% und 6% und insbesondere zwischen 0,05% und 3% des Gewichts des Bitumens oder der Bitumenmischung liegt, das bzw. die zur Herstellung der funktionalisierten Bitumen/Polymer-Zusammensetzungen angewandt wurde.

**16.** Verfahren gemäß Anspruch 10, **dadurch gekennzeichnet, daß** das Vernetzungsmittel eine bei Temperaturen von 100°C bis 230°C freie Radikale erzeugende Peroxid-Verbindung ist, die allein zur Bildung einer vernetzten Bitumen/Polymer-Zusammensetzung oder zusammen mit dem Funktionalisierungsmittel zum Bilden einer funktionalisierten Bitumen/Polymer-Zusammensetzung verwendet wird, wobei die Peroxidverbindung insbesondere ein Dihydrocarbylperoxid ist.

**17.** Verfahren gemäß Anspruch 16, **dadurch gekennzeichnet, daß** die Peroxid-Verbindung in einer Menge verwendet wird, die bis 15 Gew.-% des Copolymeren von Styrol und Butadien läuft.

**18.** Verfahren gemäß einem der Ansprüche 1 bis 9, **dadurch gekennzeichnet, daß** die Bitumen/Polymer-Zusammensetzung hergestellt wird, indem das Copolymere von Styrol und Butadien und im Fall der Verwendung das oder der zusätzliche(n) Polymer während einer Dauer von mindestens 10 Minuten und insbesondere von 10 Minuten bis 5 Stunden in gewünschten Verhältnissen mit dem Bitumen oder der Bitumenmischung bei Betriebstemperaturen von zwischen einschließlich 100°C und 230°C, insbesondere zwischen 120°C und 190°C, und unter Bewegung in Kontakt gebracht wird bzw. werden.

**19.** Verfahren gemäß einem der Ansprüche 10 bis 17, **dadurch gekennzeichnet, daß** der vernetzte oder funktionalisierte Bitumen/Polymer-Bestandteil hergestellt wird, indem das Copolymere von Styrol und Butadien und im Fall der Verwendung das oder der zusätzliche(n) Polymere während einer Dauer von mindestens 10 Minuten und insbesondere von 10 Minuten bis 5 Stunden mit dem Bitumen oder dem Bitumengemisch in gewünschten Verhältnissen bei Betriebstemperaturen von zwischen einschließlich 100°C und 230°C, insbesondere zwischen 120°C und 190°C, unter Bewegung in Kontakt gebracht wird bzw. werden, dann in das erhaltene Produkt, welches einen nicht vernetzten Bitumen/Polymer-Bestandteil aufbaut, das Kopplungsmittel oder das Funktionalisierungsmittel in gewünschter Menge einbringt und das Ganze unter Bewegung bei Temperaturen von zwischen einschließlich 100°C und 230°C, insbesondere zwischen 120°C und 190°C, während einer Dauer von mindestens 10 Minuten und insbesondere von 10 Minuten bis 5 Stunden sowie vor allem von 10 Minuten bis 3 Stunden laufend gehalten wird, um eine Reaktionsmasse zu bilden, die den vernetzten und/oder funktionalisierten Bitumen/Polymer-Bestandteil aufbaut.

**20.** Verfahren gemäß einem der Ansprüche 1 bis 19, **dadurch gekennzeichnet, daß** der Bitumen/Polymer-Zusammensetzung im Verlauf ihrer Herstellung 1% bis 40% und insbesondere 2% bis 30%, in Gewicht des Bitumens, eines Fließmittels zugesetzt wird.

**21.** Verfahren gemäß Anspruch 20, **dadurch gekennzeichnet, daß** das Fließmittel aus einem Kohlenwasserstofföl besteht, das einen Destillierbereich unter atmosphärischem Druck, bestimmt nach der Norm ASTM D 86-67, von zwischen einschließlich 100°C und 600°C und insbesondere zwischen 150°C und 400°C liegend zeigt, wobei das besagte Kohlenwasserstofföl insbesondere ein Erdölverschnitt vom aromatischen Typ, ein Erdölverschnitt vom naphtheno-aromatischen Typ, ein Erdölverschnitt vom naphthenoparaffinischen Typ, ein Erdölverschnitt vom paraffinischen Typ, ein Steinkohleöl oder auch ein aus Pflanzen stammendes Öl ist.

**22.** Verfahren gemäß Anspruch 21, **dadurch gekennzeichnet, daß** das Copolymere von Styrol und Butadien und, falls vorhanden, das oder die zusätzliche(n) Polymere und das Kopplungs- oder Funktionalisierungsmittel in das Bitumen oder die Bitumenmischung in Form einer Mutterlösung dieser Produkte im das Fließmittel aufbauenden Kohlenwasserstofföl eingebracht wird.

**23.** Verfahren gemäß Anspruch 22, **dadurch gekennzeichnet, daß** die Mutterlösung mit dem Bitumen oder der Bitumenmischung bei Betriebstemperaturen von zwischen einschließlich 100°C und 230°C, insbesondere zwischen 120°C und 190°C, und unter Bewegung vermischt wird, dann die resultierende Mischung unter Bewegung bei Temperaturen von zwischen einschließlich 100°C und 230°C, insbesondere zwischen 120°C und 190°C, während einer Dauer von mindestens 10 Minuten und insbesondere von 10 Minuten bis 2 Stunden laufend gehalten wird, um die Bitumen/Polymer-Zusammensetzung herzustellen.

**24.** Verfahren gemäß Anspruch 14 oder 15, **dadurch gekennzeichnet, daß** der Bitumen/Polymer-Zusammensetzung im Verlauf ihrer Herstellung ein oder mehrere Additive zugesetzt werden, die dazu in der Lage sind, mit den funktionellen Gruppen des funktionalisierten Copolymeren von Styrol und Butadien zu reagieren, wobei die besagten reaktiven Additive, insbesondere primäre oder sekundäre Amine, insbesondere Polyamine, Alkohole und insbesondere Polyole, Säuren und insbesondere Polysäuren, oder auch metallische Verbindungen, insbesondere Verbindungen der Metalle der Gruppen I, II, III und VIII des Periodensystems der Elemente sind.

**25.** Verfahren gemäß Anspruch 24, **dadurch gekennzeichnet, daß** die Menge des ins Milieu eingebrachten reaktiven Additivs oder der reaktiven Additive, die zur Bildung der Bitumen/Polymer-Zusammensetzung führt, 0,01% bis 10% und vorzugsweise 0,05% bis 5% des Gewichts des Bitumens oder der Bitumenmischung darstellt.

**26.** Verwendung der Bitumen/Polymer-Zusammensetzungen, die durch das Verfahren gemäß einem der Ansprüche 1 bis 25 erhalten wurden, zur Herstellung von Bitumen/Polymer-Bindemitteln, wobei die besagten Bindemittel aus den besagten Zusammensetzungen, die so wie sie sind verwendet werden, bestehen, oder auch gebildet werden durch Verdünnung der besagten Bitumen/Polymer-Zusammensetzungen durch ein Bitumen oder eine Bitumenmischung oder durch eine Bitumen/Polymer-Zusammensetzung gemäß einem der Ansprüche 1 bis 25 mit einem schwächeren Gesamtgehalt an Polymer, wobei die besagten Bitumen/Polymer-Bindemittel insbesondere, direkt oder nach Bildung einer wäßrigen Emulsion, zur Herstellung von Belägen, insbesondere von Straßenbelägen vom Typ eines oberflächlichen Überzugs, zur Herstellung von in Wärme oder Kälte angebrachten Beschichtungen bzw. Umhüllungen, oder auch zur Herstellung von Dichtungsbelägen verwendbar sind.

**27.** Mutterlösung, die insbesondere zur Herstellung von Bitumen/Polymer-Zusammensetzungen verwendbar ist, umfassend (i) ein Kohlenwasserstofföl, das einen Destillierbereich bei atmosphärischem Druck, bestimmt nach der Norm ASTM D 86-87, zwischen einschließlich 100°C und 600°C und insbesondere zwischen 150°C und 400°C zeigt, und (ii) ein Copolymer von Styrol und Butadien, das 50 Gew.-% bis 95 Gew.-% von Butadien stammenden Einheiten umfaßt, **dadurch gekennzeichnet, daß** das Copolymere von Styrol und Butadien einen Anteil von Einheiten mit 1,2-Doppelbindung, die von Butadien stammen, zwischen einschließlich 12% und 50% des Gewichts des besagten Copolymeren besitzt.

**28.** Mutterlösung gemäß Anspruch 27, **dadurch gekennzeichnet, daß** das Copolymere von Styrol und Butadien 20 Gew.-% bis 40 Gew.-% der Einheiten mit 1,2-Doppelbindung, die von Butadien stammen, umfaßt.

**29.** Mutterlösung gemäß Anspruch 27 oder 28, **dadurch gekennzeichnet, daß** das Copolymer von Styrol und Butadien 60% bis 95% der Einheiten, die von Butadien stammen, umfaßt.

**30.** Mutterlösung gemäß einem der Ansprüche 27 bis 29, **dadurch gekennzeichnet, daß** das Copolymer von Styrol und Butadien ein eine lineare oder strahlenförmige Sequenz aufweisendes Copolymer mit oder ohne statistischer Gelenkbildung ist.

**31.** Mutterlösung gemäß einem der Ansprüche 27 bis 30, **dadurch gekennzeichnet, daß** das Copolymer von Styrol und Butadien eine Gewichts-Molekularmasse von zwischen einschließlich 10.000 und 600.000 Dalton und vorzugsweise zwischen 30.000 und 400.000 Dalton liegend zeigt.

**32.** Mutterlösung gemäß einem der Ansprüche 27 bis 31, **dadurch gekennzeichnet, daß** sie eine Menge des Copolymeren von Styrol und Butadien umfaßt, die zwischen 5% und 40% und insbesondere zwischen 10% und 30% des Gewichts des Kohlenwasserstofföls darstellt.

**33.** Mutterlösung gemäß einem der Ansprüche 27 bis 32, **dadurch gekennzeichnet, daß** sie ebenfalls ein Vernetzungsmittel umfaßt, welches aus mindestens einer Verbindung aufgebaut wird, die aus der Gruppe ausgewählt wird, die durch (i) Schwefeldonor-Kopplungsmitteln, (ii) Funktionalisierungsmitteln, die unter Carboxylsäuren oder -Estern mit Thiol- oder Dischwefel-Gruppen herausgegriffen werden, und (iii) Peroxid-Verbindungen, die bei Temperaturen von zwischen einschließlich 100°C und 230°C freie Radikale erzeugen, gebildet wird.

**34.** Mutterlösung gemäß Anspruch 33, **dadurch gekennzeichnet, daß** sie - in Gewicht des Kohlenwasserstofföls - zwischen 0,05% und 15% und insbesondere zwischen 0,1% und 8% des Schwefeldonor-Kopplungsmittels oder des Funktionalisierungsmittels, und - in Gewicht des Copolymeren - 0% bis 15% der Peroxidverbindung umfaßt.